Europäisches Patentamt

European Patent Office

Office européen des brevets

(19)

(11) Publication number: **0 167 683**
**B1**

(12) **EUROPEAN PATENT SPECIFICATION**

(45) Date of publication of patent specification: **20.09.89**

(21) Application number: **84303909.0**

(22) Date of filing: **08.06.84**

(51) Int. Cl.⁴: **G 01 S 11/00, G 01 S 5/02, G 01 S 5/14**

(54) Position fixing system.

(43) Date of publication of application:
**15.01.86 Bulletin 86/03**

(45) Publication of the grant of the patent:
**20.09.89 Bulletin 89/38**

(84) Designated Contracting States:
**AT BE CH DE FR GB IT LI LU NL SE**

(56) References cited:
**EP-A-0 093 014**
**US-A-4 232 389**
**US-A-4 453 165**

(73) Proprietor: **DECCA LIMITED**
**Western Road**
**Bracknell Berkshire RG12 1RG (GB)**

(72) Inventor: **Diederich, Pierre**
**"Tara" 22 Verulam Avenue**
**Purley Surrey (GB)**

(74) Representative: **Cross, Rupert Edward Blount et al**
**BOULT, WADE & TENNANT 27 Furnival Street**
**London EC4A 1PQ (GB)**

Courier Press, Leamington Spa, England.

EP 0 167 683 B1

## Description

Background to the Invention

It is well-known that a user can fix his position with respect to several transmitters at known locations through the measurement of range or elapsed time measurements. The present invention concerns a method which makes it possible to obtain a position fix from the direct observation of range rate (i.e. frequency) from transmitters whose positions and velocities are known to the user.

Although the present invention will be particularly described with reference to a system in which the transmitters are constituted by earth-orbiting satellites, it is not intended that the invention should be restricted to such a system.

One of the best known means of navigation makes use of radio transmitters located at known sites. Ranges are measured in terms of the time taken by a radio signal to travel between transmitters and the user location. For any given point, with the additional knowledge of the location of the transmitters one can set up a set of linear simultaneous equation which computes the ranges or the equivalent time interval. In matrix form one can write conventionally:

$$Dx = u$$

where the vector $x$ represents the vector of user position, $u$ is the array of time intervals between arrival at the user and the instant of transmitting, and D is a matrix whose terms represent partial derivatives of time intervals with respect to the co-ordinates of the user. Assuming that matrix D is neither singular nor ill-conditioned, its inverse can be computed to produce the navigation solution

$$x = D^{-1}u$$

where the user's position co-ordinates can be found from the measurements of ranges or time intervals. If there is no independent means of maintaining synchronisation between time at the transmitters and time at the user receiver, the dimensions of D (and $D^{-1}$) need to be increased by one to a square matrix of $(n + 1) \times (n + 1)$ elements) for n-dimensional navigation, and the position vector can be regarded as including time as well as geometric co-ordinates.

Another well-known means of navigation consists of following the frequency of a radio signal transmitted from a single orbiting satellite, whose orbit and position are known at any time. The user observes the Doppler frequency throughout the trajectory of the satellite and, from the measurement of the time when the Doppler frequency goes through zero, and from the determination of the Doppler curve against time, he possesses all the knowledge necessary to fix his position.

This is necessarily a long process depending on the orbital height. For a satellite in a 2 hour orbit, the transit time is about 20 minutes, and for a 12 hour orbit the transit time is about 5 hours. These times are too long to obtain an accurate position fix unless the question arises whether, with a small number (for example, five) of orbiting satellites, visible simultaneously to the user, it is possible for him to determine his position from a quasi-instantaneous sample of the frequencies of signals transmitted from those satellites (say within seconds), without any need for synchronisation between his time source and the satellite, and without the need for him to carry a calibrated frequency standard.

As the satellite movements are known, their position and velocity are known at any time. Then the radial velocity of each satellite to a fixed position on Earth can be computed, and hence the Doppler frequency determined. A set of simultaneous linear equations — one equation for each satellite — can then be written, expressing the Doppler offset as a function of user co-ordinates and time. As described above, this set of simultaneous equations can be written in terms of a $(n + 1) \times (n + 1)$ matrix (F) which, when multiplied by the $(n + 1)$ element vector containing user position and time, yields the $(n + 1)$ Doppler frequencies expected at the location of the user from the $(n + 1)$ satellite transmissions (or at the $(n + 1)$ satellites from a single transmission emanating from the user site). The partial differential coefficients which form the elements of the matrix describe the dependence of the Doppler offset on user co-ordinates and time; their value may be computed from the knowledge of the satellite's motion. So again we have a matrix equation $Fx \times v$, where $v$ represents the $(n + 1)$ Doppler frequencies. If F satisfies the same criteria as D, i.e. it is neither singular nor ill-conditioned, its inverse can be obtained and the user can obtain his position co-ordinates $x$ from the measurement of Doppler frequencies $v$:

$$x \times F^{-1}v$$

The reception of $v$ still implies access to a precision frequency source at the user site, uncontaminated by Doppler shifts. Whilst this is not necessarily a insurmountable difficulty in all applications, it is clearly preferable to eliminate that requirement. As is explained above the need to carry a synchronised time source was removed by the provision of one additional fixed transmitter. By analogy, the need for a frequency standard at the user's site can be eliminated by providing a further moving satellite. The matrix F (and $F^{-1}$) then becomes $(n + 2) \times (n + 2)$ for n-dimension navigation.

For the three dimensional case the position vector $x$ contains the co-ordinates x, y, z of the user site, $\tau$ and g, where $\tau$ represents the difference in synchronisation between user and satellites, and where g is the frequency offset between the satellite frequency source and the user equipment. In detail, the matrix equation then represents the set of simultaneous equations:

$$
\begin{pmatrix}
\frac{\partial f_1}{\partial x} & \frac{\partial f_1}{\partial y} & \frac{\partial f_1}{\partial z} & \frac{\partial f_1}{\partial \tau} & 1 \\
\frac{\partial f_2}{\partial x} & \frac{\partial f_2}{\partial y} & \frac{\partial f_2}{\partial z} & \frac{\partial f_2}{\partial \tau} & 1 \\
\frac{\partial f_3}{\partial x} & \frac{\partial f_3}{\partial y} & \frac{\partial f_3}{\partial z} & \frac{\partial f_3}{\partial \tau} & 1 \\
\frac{\partial f_4}{\partial x} & \frac{\partial f_4}{\partial y} & \frac{\partial f_4}{\partial z} & \frac{\partial f_4}{\partial \tau} & 1 \\
\frac{\partial f_5}{\partial x} & \frac{\partial f_5}{\partial y} & \frac{\partial f_5}{\partial z} & \frac{\partial f_5}{\partial \tau} & 1
\end{pmatrix}
\begin{pmatrix}
x \\ y \\ z \\ \tau \\ g
\end{pmatrix}
=
\begin{pmatrix}
f_1 \\ f_2 \\ f_3 \\ f_4 \\ f_5
\end{pmatrix}
$$

We have shown that it is possible to obtain at least n position co-ordinates from quasi-instantaneous frequency measurements of (n + 2) moving satellites without the need for an accurate frequency source or a synchronised clock.

Note that n user-to-satellite position vectors need to be linearly independent, but that there is no restriction on satellite velocity vectors which could even be mutually parallel: one satellite may even be geo stationary.

An example of a constellation capable of providing a minimum of 5 (or 4) satellites in view at any time on any point of the Earth is the one proposed for "GPS Navstar" or "ESA NAVSAT" — 24 (or 18) satellites uniformly spaced in 3 inclined (55°) 12 hour circular orbits — providing a continuous global 3- (or 2-) dimensional navigation service.

The signal structure from the satellite can be made very simple. Multiple access is preferably achieved through time division, as is well established on other navigation aids like "Omega" or "HiFix".

US—A—4453165 discloses a navigation system comprising a plurality of satellites of which the positions and velocities are known, and a receiver for use in this navigation system. Such a receiver is arranged to receive and separate the signal emitted by the satellites, each of these signals containing a Doppler frequency shift.

Summary of the Invention

In one aspect, the present invention provides a receiver for use in a navigation system which includes a multiplicity of mobile transmitters of which the positions and velocities are known functions of time, the said mobile transmitters each emitting at least one signal of known frequency, the said receiver comprising means for receiving and separating the signals received from a plurality of said mobile transmitters, the received signals each containing a Doppler frequency shift corresponding to the respective radial velocity of the respective transmitter with respect to the said receiver; the receiver being characterised in that the said means are arranged to receive and separate the signals received from at least (n + 2) of said transmitters, where n represents the dimensions of a co-ordinate system with respect to which the position of said receiver is to be determined and in that it comprises further means for determining and storing values representing the Doppler frequency shifts associated respectively with said (n + 2) transmitters, and means arranged to solve (n + 2) simultaneous linear equations by which the stored Doppler frequency shifts are linked to the position co-ordinates of the receiver and to the frequency and time offsets between the transmitters and the receiver, so as to obtain the position co-ordinates of the receiver in the said co-ordinate system.

In another aspect, the present invention provides a navigation system comprising at least five artificial satellites of which the positions and velocities are known functions of time, each of said satellites radiating at least one signal of known frequency, all the said known frequencies being in a known relationship, said satellites having orbits such that an unlimited number of receivers can receive said signals from a plurality of satellites, the system including at least one receiver comprising means for receiving and separating the signals received from said plurality of satellites, said received signals including a Doppler frequency shift in accordance with the velocity vector between the receiver and the respective satellite, the system being characterised in that said means are arranged to receive and separate the signals received from at least (n + 2) of said transmitters, where n represents the dimensions of a co-ordinate system with respect to which the position of said receiver is to be determined and in that it comprises further means for determining and storing the values representing said Doppler frequency shifts; and means arranged to solve (n + 2) simultaneous linear equations by which the stored Doppler frequency shifts are linked to the position co-ordinates of the receiver and to the frequency and time offsets between the transmitters and the receiver, so as to convert the velocity information represented by said Doppler frequency shifts into the position co-ordinates of said receiver in said co-ordinate system.

Brief Description of the Accompanying Drawing

Figure 1 illustrates the geometry of a constellation of satellites;

Figure 2 is a diagram illustrating sequential switching of satellite signals; and

Figure 3 illustrates schematically a preferred embodiment of the signal processing components according to one embodiment of the invention.

Description of Preferred Embodiment

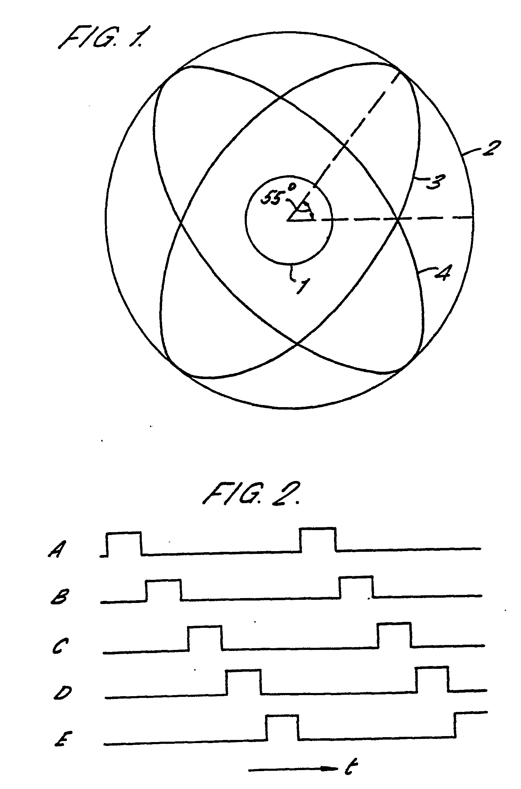

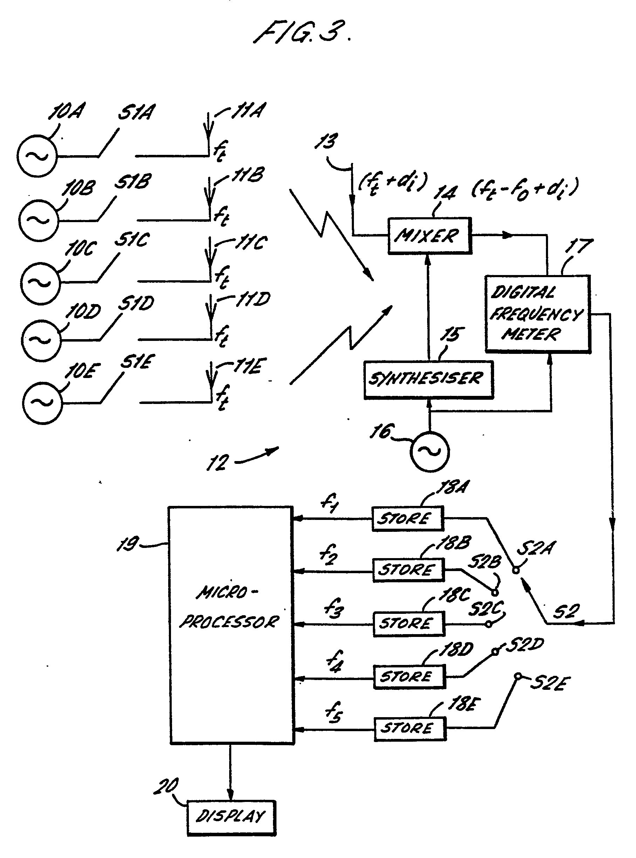

Figure 1 illustrates the geometry of a known proposal for a constellation of satellites and in particular the "Navstar". In this system artificial satellites encircle the Earth 1 in three 12-hour relatively inclined circular orbits, there being, for example, 8 satellites in each orbital plane. It is not necessary to employ all the satellites in the system for the purpose of the present invention and the system shown in Figure 3 employs signals from only 5 satellites.

Figure 2 illustrates a sequence of switching signals from 5 satellites, A to E inclusive. Figure 2 shows a simple system in which the satellites are switched to radiate one at a time in cyclic sequence. The waveforms in Figure 2 are not intended to indicate the value of any particular signal but merely to show, where a pulse occurs, that the satellite is radiating at the respective time.

Figure 3 illustrates schematically 5 satellites and a mobile receiver for utilising the transmissions from the satellites. Satellite A includes a transmitter shown schematically as an oscillator 10A coupled *via* a switch S1A to an antenna 11A so as to radiate, for reception by a receiver 12 a continuous wave signal of frequency $f_t$. In like manner satellite B essentially comprises oscillator 10B coupled by way of switch S1B to antenna 11B for radiation of the same frequency $f_t$ to the receiver 12. Satellites C to E inclusive are similarly arranged to radiate from respective antennas 11C to 11E.

In this embodiment of the invention, where the signals radiated by the satellites are all of the same frequency, a switching sequence such as shown in Figure 2 is necessary and has to be controlled by suitable signals obtained, for example, from transmissions from a ground control station or otherwise in generally known manner. However, provided that there is no overlap between the transmissions of the signals at frequency $f_t$ from the satellite, the duration of the individual transmissions and the precise timing of them is not important and there is no requirement for any highly accurate synchronised clock.

Signals from the various satellites are received at the receiver 12 by way of an antenna 13 which feeds one input of a mixer 14 which receives at another input a local oscillator signal at frequency $f_0$ from a synthesiser 15 driven by a reference oscillator 16. The signal received at antenna 13 is of the frequency $(f_t + d_i)$ where $d_i$ is the Doppler frequency associated with the particular satellite from which signals are received at the relevant time. The mixer is provided in order to down convert the incoming signal prior to the measurement of its frequency. Thus the output of the mixer is a frequency $(f_t - f_0 + d_i)$ where, in successive periods of reception, $d_i$ has the values $d_A$, $d_B$, etc., where $d_A$ is the Doppler frequency associated with the relative movement between satellite A and the receiver 12 and so on.

The down converted input signal is fed to one input of a digital frequency meter 17 which is clocked by the reference oscillator 16. Methods of digital frequency measurement are well-known and need not be described in any detail. The digital output signals from the meter 17 are fed into a switch $S_2$ which is synchronised with the switching of the switches S1A, S1B etc., so as to direct the respective down converted received signal to the terminals S2A (for the signal received from satellite A), to the terminal S2B, for the down converted signal from satellite B and so on. Thus the sequential output from the frequency meter 17 are transferred to individual digital stores 18A, 18B, 18C etc. Any offset in the numerical values stored in the stores is common to all five measurements.

The stored values constitute a five dimensional vector $(f_1, f_2, f_3, f_4, f_5)$ which is fed to a microprocessor 19.

It is shown in the foregoing that position co-ordinates can be obtained, for example, by matrix inversion, of a vector such as the vector obtainable from the stored digital values. Accordingly, the microprocessor is programmed in accordance with any suitable standards computer algorithm, for example, a matrix inversion algorithm, or a Gauss-Seidl elimination, to produce values for $x$, $y$, $z$, $\tau$ and $g$ as described above. Of these values the required position vector $(x, y, z)$ is extracted and displayed in numerical or graphical form on a display 20.

The technique described in the foregoing may be extended to include determination of the velocity of a receiver, especially for a surface vehicle of which the velocity vector does not have a vertical component or even an aircraft of which the vertical component of velocity is small. In order to solve for the two velocity components $dx/dt$ and $dy/dt$, signals from two further satellites would be required.

The foregoing embodiment is an example of a navigation system which provides at least $(n + 2)$ transmitters of which the positions and velocities are known as a function of time each emitting at least one known frequency and all frequencies being in a known relationship so positioned that an unlimited number of passive users can obtain range rate information from n linearly independent directions which in turn can be converted into knowledge of n position co-ordinates of the user in addition to time and actual transmitted frequency. The user equipment can therefore attract the frequency of at least $n + 2$

# EP 0 167 683 B1

transmitters to obtain n-dimensional position fixing, time offset and the difference between the actual transmitter frequency and the frequency source of the user without specific synchronisation with the satellite time source and without a calibrated frequency source. The user equipment may re-transmit signals received from transmitters as described to other users or to a ground station which can by the same technique employed by the user equipment establish in a quasi-instantaneous manner the mobile user's position and time in spite of uncertainty in the frequency shift between the received or re-transmitted frequency sets at the mobile user.

## Claims

1. A receiver for use in a navigation system which includes a multiplicity of mobile transmitters (10, 11) of which the positions and velocities are known functions of time, the said mobile transmitters each emitting at least one signal of known frequency, the said receiver comprising means (13, 14, 15) for receiving and separating the signals received from a plurality of said mobile transmitters, the received signals each containing a Doppler frequency shift corresponding to the respective radial velocity of the respective transmitter with respect to the said receiver; the receiver being characterised in that the said means are arranged to receive and separate the signals received from at least (n + 2) of said transmitters, where n represents the dimensions of a co-ordinate system with respect to which the position of said receiver is to be determined and in that it comprises further means for determining (17) and storing (18) values representing the Doppler frequency shifts associated respectively with said (n + 2) transmitters, and means (19) arranged to solve (n + 2) simultaneous linear equations by which the stored Doppler frequency shifts are linked to the position co-ordinates of the receiver and to the frequency and time offsets between the transmitters and the receiver, so as to obtain the position co-ordinates of the receiver in the said co-ordinate system.

2. A receiver according to claim 1, wherein n is from two to four.

3. A navigation system comprising at least five artificial satellites of which the positions and velocities are known functions of time, each of said satellites radiating at least one signal of known frequency, all the said known frequencies being in a known relationship, said satellites having orbits such that an unlimited number of receivers can receive said signals from a plurality of satellites, the system including at least one receiver comprising means for receiving and separating (13, 14, 15) the signals received from said plurality of satellites, said received signals including a Doppler frequency shift in accordance with a velocity vector between the receiver and the respective satellite, the system being characterised in that said means (13, 14, 15) are arranged to receive and separate the signals received from at least (n + 2) of said transmitters, where n represents the dimensions of a co-ordinate system with respect to which the position of said receiver is to be determined and in that it comprises further means for determining (17) and storing (18) the values representing said Doppler frequency shifts; and means (19) arranged to solve (n + 2) simultaneous linear equations by which the stored Doppler frequency shifts are linked to the position co-ordinates of the receiver and to the frequency and time offsets between the transmitters and the receiver, so as to convert the velocity information represented by said Doppler frequency shifts into the position co-ordinates of said receiver in said co-ordinate system.

## Patentansprüche

1. Empfänger zur Verwendung in einem Navigationssystem, das mehrere bewegliche Sender (10, 11) enthält, deren Positionen und Geschwindigkeiten bekannte Funktionen der Zeit sind und die jeweils mindestens ein Signal bekannter Frequenz emittieren, mit Mitteln (13, 14, 15) zum Empfang und zur Trennung der von einer Vielzahl der beweglichen Sender empfangenen Signale, die jeweils eine Doppler-Frequenzverschiebung entsprechend der jeweiligen Radialgeschwindigkeit des entsprechenden Senders in Bezug auf den Empfänger aufweisen, dadurch gekennzeichnet, daß die Mittel zum Empfang und zur Trennung der von wenigstens (n + 2) Sendern empfangenen Signale aufgelegt sind, worin n die Richtungen eines Koordinatensystems bedeutet, in Bezug auf das die Position des Empfängers zu bestimmen ist, und daß weiterhin Mittel (17, 18) zur Bestimmung und Speicherung von Werten, welche die den (n + 2) Sendern zugeordneten Doppler-Frequenzverschiebungen repräsentieren, sowie Mittel (19) vorgesehen sind, die zur Lösung von (n + 2) gleichzeitiger linearer Gleichungen ausgelegt sind, gemäß denen die gespeicherten Doppler-Frequenzverschiebungen mit den Positionskoordinaten des Empfängers und dem Frequenz- und Zeitversatz zwischen den Sendern und dem Empfänger verknüpft sind, um die Positionskoordinaten des Empfängers im Koordinatensystem zu gewinnen.

2. Empfänger nach Anspruch 1, bei dem n im Bereich von zwei bis vier liegt.

3. Navigationssystem mit wenigstens fünf künstlichen Satelitten, deren Positionen und Geschwindigkeiten bekannte Funktionen der Zeit sind, die jeweils wenigstens ein Signal bekannter Frequenz aussenden, wobei die bekannten Frequenzen in einem bekannten Zusammenhang stehen und die solche Umlaufbahnen besitzen, daß eine unbegrenzte Anzahl von Empfängern die Signale von einer Vielzahl von Satelliten empfangen kann, und mit wenigstens einem Empfänger, der Mittel (13, 14, 15) zum Empfang und zur Trennung der von der Vielzahl von Satelliten empfangenen Signale aufweist, wobei die empfangenen Signale eine Doppler-Frequenzverschiebung in Abhängigkeit von einem Geschwindigkeitsvektor zwischen

5

dem Empfänger und dem entsprechenden Satellit aufweisen, dadurch gekennzeichnet, daß die Empfangs- und Trennmittel (13, 14, 15) so ausgelegt sind, daß sie die von wenigstens (n + 2) Sendern empfangenen Signale empfangen und trennen, wobei n die Richtungen eines Koordinatensystems bedeutet, in Bezug auf das die Position des Empfängers zu bestimmen ist, und daß weiterhin Mittel (17, 18) zur Bestimmung und Speicherung der die Doppler-Frequenzverschiebung repräsentierenden Werte sowie Mittel (19) vorgesehen sind, die zur Lösung von (n + 2) gleichzeitigen linearen Gleichungen ausgelegt sind, gemäß denen die gespeicherten Doppler-Frequenzverschiebungen mit den Positionskoordinaten des Empfängers und dem Frequenz- und Zeitversatz zwischen den Sendern und dem Empfänger verknüpft sind, um die durch die Doppler-Frequenzverschiebungen repräsentierte Geschwindigkeitsinformation in Positionskoordinaten des Empfängers im Koordinatensystem zu überführen.

**Revendications**

1. Un récepteur prévu pour l'utilisation dans un système de navigation qui comprend un ensemble d'émetteurs mobiles (10, 11) dont les positions et les vitesses sont des fonctions connues du temps, chacun de ces émetteurs mobiles émettant au moins un signal de fréquence connue, le récepteur comprenant des moyens (13, 14, 15) pour recevoir et séparer les signaux reçus à partir d'un ensemble de ces émetteurs mobiles, chaque signal reçu présentant un décalage de fréquence Doppler qui correspond à la vitesse radiale respective de l'émetteur respectif par rapport au récepteur, le récepteur étant caractérisé en ce que les moyens précités sont conçus de façon à recevoir et à séparer les signaux qui sont reçus à partir d'au moins (n + 2) des émetteurs, en désignant par n les dimensions d'un système de coordonnées par rapport auquel la position du récepteur doit être déterminée, et en ce qu'il comprend des moyens supplémentaires destiné à déterminer (17) et à enregistrer (18) des valeurs représentant les décalages de fréquence Doppler qui sont respectivement associés aux (n + 2) émetteurs, et des moyens (19) qui sont conçus pour résoudre (n + 2) équations linéaires simultanées qui lient les décalages de fréquence Doppler enregistrés aux coordonnées de position du récepteur et aux écarts de fréquence et de temps entre les émetteurs et le récepteur, afin d'obtenir les coordonnées de position du récepteur dans le système de coordonnées.

2. Un récepteur selon la revendication 1, dans lequel n va de deux à quatre.

3. Un système de navigation comprenant au moins cinq satellites artificiels dont les positions et les vitesses sont des fonctions connues du temps, chacun des satellites rayonnant au moins un signal de fréquence connue, toutes ces fréquences connues présentant entre elles une relation connue, les satellites ayant des orbites telles qu'un nombre illimité de récepteurs peuvent recevoir les signaux précités à partir d'un ensemble de satellites, le système comprenant au moins un récepteur qui comporte des moyens pour recevoir et séparer (13, 14, 15) les signaux reçus à partir de l'ensemble de satellites, ces signaux reçus comprenant un décalage de fréquence Doppler, qui correspond à un vecteur vitesse entre le récepteur et le satellite respectifs, le système étant caractérisé en ce que les moyens précités (13, 14, 15) sont conçus pour recevoir et séparer les signaux reçus à partir d'au moins (n + 2) des émetteurs, en désignant par n les dimensions d'un système de coordonnées par rapport auquel on doit déterminer la position du récepteur, et en ce qu'il comprend des moyens supplémentaires pour déterminer (17) et pour enregistrer (18) les valeurs réprésentant les décalages de fréquence Doppler; et des moyens (19) qui sont conçus pour résoudre (n + 2) équations linéaires simultanées qui lient les décalages de fréquence Doppler enregistrés aux coordonnées de position du récepteur et aux écarts de fréquence et de temps entre les émetteurs et le récepteur, afin de convertir l'information de vitesse représentée par les décalages de fréquence Doppler en coordonnées de position du récepteur dans le système de coordonnées.

*FIG. 1.*

*FIG. 2.*

## FIG.3.